# EUROPÄISCHE PATENTSCHRIFT

(11) **EP 2 851 304 B1**
(45) Veröffentlichungstag und Bekanntmachung des Hinweises auf die Patenterteilung: **08.06.2016**
(21) Anmeldenummer: 13185373.1
(22) Anmeldetag: 20.09.2013
(51) Int. Cl.: B65B 7/16, B65B 59/04, B65B 43/46, B65B 43/52, B65G 15/28

(54) **Schalenverschließmaschine mit wechselbarem Bandkörper**
Jacket closing machine with exchangeable tape body
Machine de fermeture de coques avec corps de bande échangeable

(43) Veröffentlichungstag der Anmeldung: 25.03.2015
(73) Patentinhaber: MULTIVAC Sepp Haggenmüller SE & Co. KG, 87787 Wolfertschwenden (DE)
(72) Erfinder: Gabler, Albert, 87787 Wolfertschwenden (DE); Negele, Wolfgang, 87724 Ottobeuren (DE); Kelly, David, 87634 Obergünzburg (DE)
(74) Vertreter: Grünecker Patent- und Rechtsanwälte PartG mbB

(56) Entgegenhaltungen:
- WO-A1-2007/107703
- DE-A1-102009 004 558
- JP-A- 2003 048 613
- US-A- 5 964 340

## Beschreibung

Die Erfindung bezieht sich auf eine Kombination einer Schalenverschließmaschine mit einer Zuführeinrichtung gemäß dem Oberbegriff des Anspruchs 1.

Aus der DE 10 2009 004 558 A1 und WO 2007/107703 A1 sind Schalenverschließmaschinen mit schwenkbaren Bandkörpern bekannt, um ein Transportband herausnehmen und außerhalb der Maschine reinigen bzw. austauschen zu können. Die Reinigung der Bauteile des schwenkbaren Bandkörpers und der statisch angeordneten Antriebseinrichtung erfolgt in der Schalenverschließmaschine. Der Antrieb des Transportbands erfolgt mittels einer Antriebswelle auf der Seite, auf der die Schalen transportiert werden.

Aufgabe der vorliegenden Erfindung ist es, eine Schalenverschließmaschine bereitzustellen, bei der sowohl der Antrieb als auch die Reinigbarkeit von Transportband, Bandkörper und Antriebseinrichtung verbessert sind.

Diese Aufgabe wird gelöst durch eine Kombination einer Schalenverschließmaschine mit einer Zuführeinrichtung mit den Merkmalen des Anspruchs 1. Vorteilhafte Weiterbildungen der Erfindung sind in den Unteransprüchen angegeben.

Die erfindungsgemäße Schalenverschließmaschine umfasst wenigstens einen Bandkörper mit einem Transportband zum Transportieren von Schalen und eine Antriebseinrichtung und zeichnet sich dadurch aus, dass der Bandkörper an eine Wechseleinrichtung, die an oder bei der Schalenverschließmaschine vorgesehen ist, überstellbar ist. Dies bringt den Vorteil mit sich, dass die Antriebseinrichtung in der Schalenverschließmaschine nach der Entnahme des Bandkörpers zusammen mit dem Transportband zur Reinigung gut zugänglich ist und nicht durch den Bandkörper teilweise verdeckt wird. Der Bandkörper selbst ist in der Wechseleinrichtung sehr gut zugänglich und leicht zu reinigen, nachdem das Transportband von dem Bandkörper entfernt wurde. In der Wechseleinrichtung ist es auch möglich, den Bandkörper und das Transportband gemeinsam zu reinigen.

Mit der Bezeichnung "an oder bei der Schalenverschließmaschine" ist gemeint, dass die Wechseleinrichtung direkt an der Schalenverschließmaschine vorgesehen oder mit ihr verbunden sein kann, oder aber dass sie vorgesehen oder verbunden ist mit einer Komponente, die funktionell in den Produktionsprozess der Schalenverschließmaschine eingebunden ist, wie beispielsweise ein Zuführband für die Schalenverschließmaschine. Mit der Forderung, dass die Wechseleinrichtung "zur Aufnahme des Bandkörpers konfiguriert" ist, ist gemeint, dass die Wechseleinrichtung beispielsweise durch ihre Form so gestaltet ist, dass sie eine sichere, stabile Lagerung des Bandkörpers in seiner Wechselposition erlaubt.

Erfindungsgemäß ist das Transportband mittels der Antriebseinheit und einer Antriebswelle an seiner Innenseite antreibbar, um die Einflüsse von Verschmutzung durch die beispielsweise pastösen oder flüssigen Produktreste auf der Außen- bzw. Oberseite des Transportbands zu reduzieren. Damit werden die Reinigungszyklen verlängert und die Stillstandszeiten der Schalenverschließmaschine verringert. Dabei umfasst der Bandkörper die Antriebswelle, die trennbar mit der Antriebseinrichtung gekoppelt ist, um ein einfaches Wechseln bzw. die Entnahme des Bandkörpers zu ermöglichen.

Die Wechseleinrichtung ist an einer in Produktionsrichtung stromaufwärts vor einem Zuführband der Schalenverschließmaschine angeordneten Zuführeinrichtung vorgesehen, da dort gegenüber der Schalenverschließmaschine an einer Bedienseite der Verpackungsanlage mehr Platz zur Verfügung steht und beispielsweise Laufwege zwischen zwei benachbarten Verpackungsanlagen durch die Wechseleinrichtung nicht eingeschränkt werden.

Bevorzugt ist die Wechseleinrichtung zur Aufnahme von wenigstens zwei Bandkörpern vorgesehen. Dabei umfasst die Wechseleinrichtung wenigstens eine Konsole, die zur Aufnahme von wenigstens einem Bandkörper konfiguriert ist. Somit können auch mehrere in der Schalenverschließmaschine befindliche Bandkörper zeitgleich zur Reinigung oder zum Austauschen der Transportbänder in die Wechseleinrichtung überstellt und in der oder den Konsolen aufgenommen werden.

Vorzugsweise ist die Konsole einteilig, insbesondere aus Stahlblech als Biege- und/oder Stanzteil, ausgeführt.

Der Bandkörper ist in einer besonders vorteilhaften Ausführung zusammen mit dem Transportband werkzeuglos von der Antriebseinheit demontierbar, um diese Einheit ohne großen Aufwand aus der Schalenverschließmaschine entnehmen und an die Wechseleinrichtung überstellen zu können. Somit werden Stillstandszeiten für Reinigung, Wartung oder Umbau reduziert.

In einer weiteren Ausgestaltung der Erfindung ist vorgesehen, dass der Bandkörper mit einer ersten Seite in der Antriebseinrichtung lagerbar ist und mit einer der ersten Seite
gegenüberliegenden zweiten Seite werkzeuglos mittels Verriegelungen an der Antriebseinrichtung befestigbar ist, um eine einfache konstruktive Ausführung von Bandkörper und Antriebseinrichtung zu ermöglichen.

Ein Verfahren zum Wechseln oder Reinigen des Transportbands und/oder des Bandkörpers und/oder der Antriebseinrichtung der Schalenverschließmaschine zeichnet sich dadurch aus, dass das Transportband zusammen mit dem Bandkörper aus einer Arbeitsposition an die Wechseleinrichtung, die an oder bei der Schalenverschließmaschine vorgesehen ist, überstellt wird und dort das Transportband von dem Bandkörper abgenommen wird, um das Transportband und den Bandkörper zu reinigen oder das Transportband zu wechseln.

Der Bandkörper wird vorzugsweise werkzeuglos aus seiner Arbeitsposition in der Schalenverschließmaschine von der Antriebseinrichtung entkoppelt, um eine schnelle Reinigung bei gleichzeitiger guter Zugänglichkeit von Antriebseinrichtung, Bandkörper und Transportband ausführen zu können.

Bevorzugt wird der Bandkörper in der Konsole der Wechseleinrichtung derart aufgenommen, um das Transportband vom Bandkörper herunterzunehmen. Denkbar ist auch, dass die Wechseleinrichtung wenigstens eine Aufnahme für das Transportband selbst zum Reinigen umfasst. Das Transportband kann beispielsweise als Gurt, als Gliederkettenband, als mehrere Einzelriemen, insbesondere Zahnriemen, oder ähnliches ausgeführt sein.

Im Folgenden wird ein vorteilhaftes Ausführungsbeispiel der Erfindung anhand einer Zeichnung näher erläutert. Im Einzelnen zeigen:
- Fig. 1: eine erfindungsgemäße Schalenverschließmaschine mit geöffneten Schutzhauben und einer Zuführeinrichtung,
- Fig. 2: eine Detailansicht der Antriebseinrichtung mit Bandkörper und Transportband in der Arbeitsposition,
- Fig. 3: eine Einzelansicht von Bandkörper mit Transportband und
- Fig. 4: den Bandkörper in der Wechseleinrichtung in einer Reinigungsposition.

Gleiche Komponenten sind in den Figuren durchgängig mit gleichen Bezugszeichen versehen.

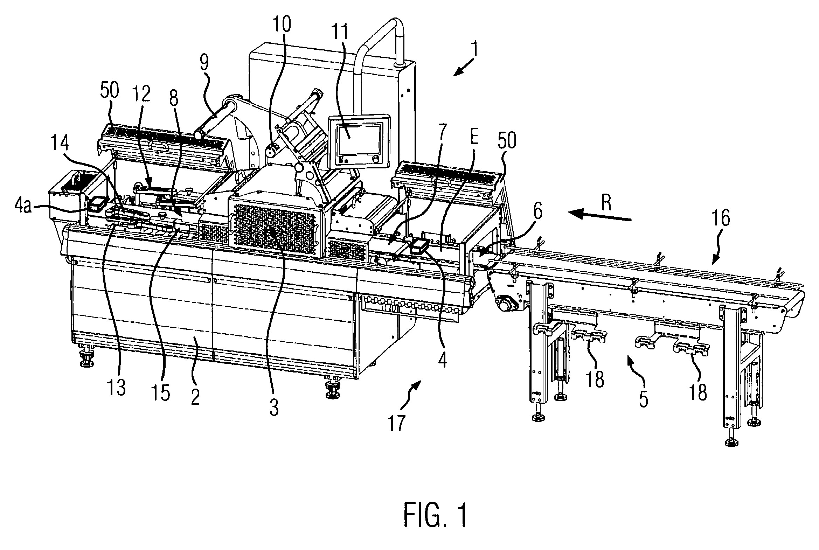

Figur 1 zeigt in perspektivischer Ansicht eine erfindungsgemäße Schalenverschließmaschine 1 mit geöffneten Schutzhauben 50. Die Schalenverschließmaschine 1 verfügt über ein Maschinengestell 2, auf dem eine Verschließvorrichtung 3 (z. B. eine Siegelstation) zum Verschließen sowie gegebenenfalls zum Siegeln und/oder Evakuieren und/oder Begasen von zugeführten Schalen 4 angeordnet ist. Die Verpackungsmaschine 1 verfügt ferner über ein Förderband 6 und ein Sammelband 7 zum Zuführen der mit Produkt gefüllten Schalen 4, ein Abführband 8 zum Abtransportieren der verschlossenen Schalen 4a und einen Restfolienaufwickler 9 zum Aufwickeln der nach dem Versiegeln verbleibenden Folienbahn, dem sogenannten Restfoliengitter, der nicht näher dargestellten Deckelfolie, die von einer Folienzuführrolle 10 aufgenommen und abgewickelt wird. Eine Anzeige 11 ermöglicht dem Bediener der Schalenverschließmaschine 1 das Überprüfen und Steuern des Betriebs der Schalenverschließmaschine 1. Ein Greifersystem 12 umfasst einen Übergabeschlitten 13, eine Schwenkvorrichtung 14 und zwei Greiferarme 15. Die Bewegung des Greifersystems 12 in und gegen eine Produktionsrichtung R erfolgt zum Einbringen von unverschlossenen Schalen 4 vom Sammelband 7 in die Verschließvorrichtung 3 und zum Ausbringen von verschlossenen Schalen 4a aus der Verschließvorrichtung 3 auf das Abführband 8. Die Transportflächen der Bänder 6, 7, 8 für Schalen 4, 4a definieren eine horizontale Transportebene E.

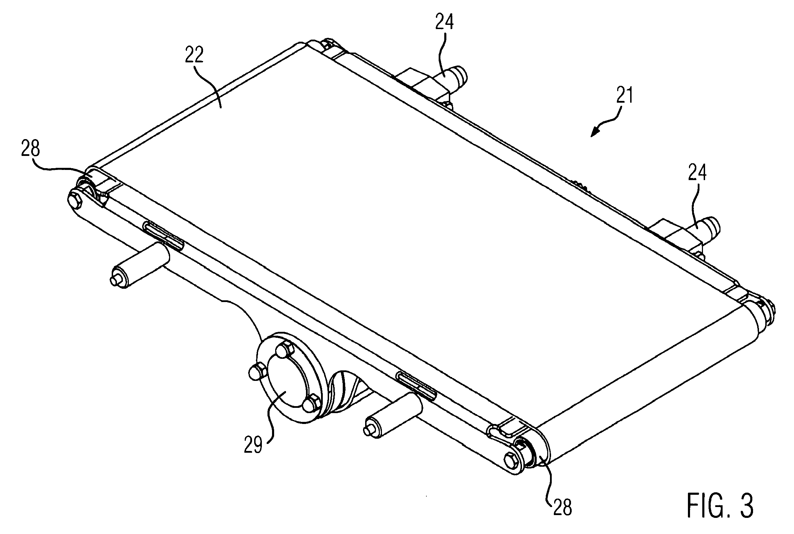

In der Produktionsrichtung R stromaufwärts der Schalenverschließmaschine 1 ist vor dem Förderband 6 eine Zuführeinrichtung 16 angeordnet, die mit einem Produkt gefüllte Schalen 4 in willkürlichem Abstand zueinander der Schalenverschließmaschine 1 zuführt. Auf einer der Bedienseite 17 der Schalenverschließmaschine 1 entsprechenden Seite der Zuführeinrichtung 16 ist eine Wechseleinrichtung 5 in Form von zwei jeweils einteiligen Konsolen 18 vorgesehen, die jeweils einen Bandkörper 21 (siehe Fig. 3) aufnehmen können.

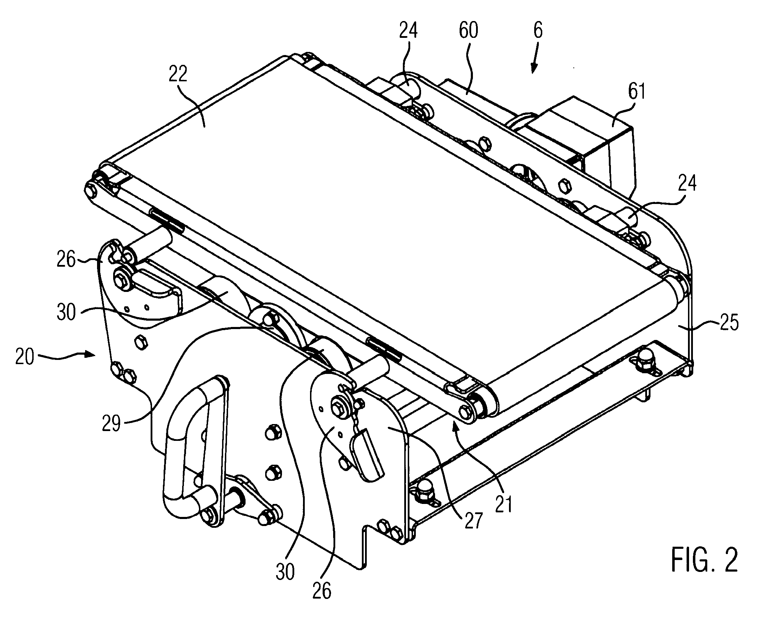

Fig. 2 zeigt das Förderband 6, das eine Antriebseinrichtung 20, einen Bandkörper 21 und ein Transportband 22 umfasst. Der Bandkörper 21 ist an einer ersten (in der Zeichnungsebene weiter hinten gelegenen) Seite mittels zweier Achsen 24 an einer Rückwand 25 der Antriebseinrichtung 20 gelagert und mit einer zweiten (in der Zeichnungsebene weiter vorne gelegenen) Seite an den zwei Achsen 24 schlüssellos mittels zweier Verriegelungen 26 in Form von drehbaren Hebeln an einer Vorderwand 27 der Antriebseinrichtung 20 verriegelbar und demontierbar. In der Fig. 2 ist die in der Zeichnung rechts gezeigte Verriegelung 26 in der verriegelten Stellung und die in der Zeichnung links gezeigte Verriegelung 26 in der geöffneten Stellung dargestellt. Eine Antriebswelle 29 ist mittels einer nicht näher dargestellten Kupplung in der Antriebseinrichtung 20 gelagert. Die Antriebswelle 29 ist über einen Servomotor 60 und ein Getriebe 61 angetrieben.

Fig. 3 zeigt den von der Antriebseinrichtung 20 abgenommen Bandkörper 21. Der Bandkörper 21 umfasst zwei am Anfang und am Ende angebrachte Umlenkrollen 28 sowie eine zwischen ihnen gelegene Antriebswelle 29, die das Transportband 22 antreibt, indem die Innenseite des Transportbands 22 teilweise an der Antriebswelle 29 anliegt und um sie herumläuft. Die für einen Antrieb benötigte Reibung zwischen der Antriebswelle 29 und dem Transportband 22 wird mittels zweier Umlenkwellen 30 an der Antriebseinrichtung 20 (siehe Fig. 2) im eingebauten Zustand, nämlich in der Arbeitsposition, erzeugt.

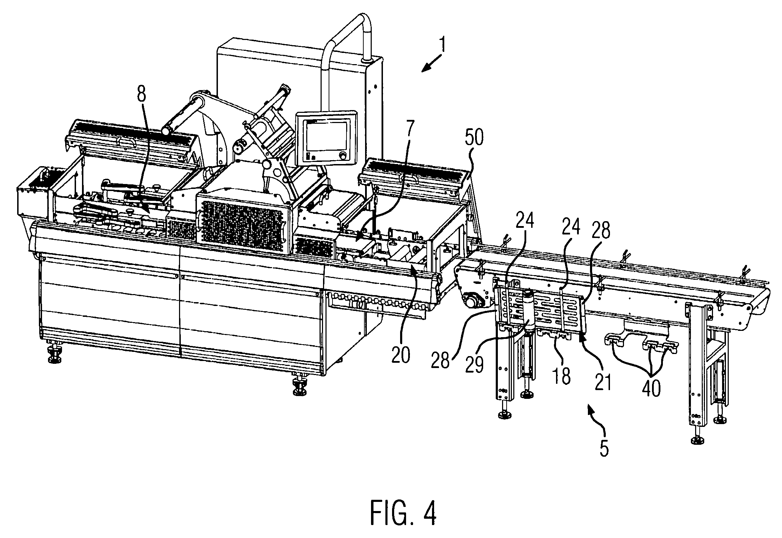

Fig. 4 zeigt den Bandkörper 21 des Förderbands 6 in der Konsole 18 an der Wechseleinrichtung 5 ohne das bereits vom Bandkörper 21 entfernte Transportband 22. Am Beispiel des Förderbandes 6 ist in Fig. 4 die gute Zugänglichkeit für den Bediener zum Reinigen der Antriebseinrichtung 20 bei gleichzeitig geöffneten Schutzhauben 50 erkennbar. Analog gilt dies auch für das Sammelband 7 und für das Abführband 8. Die Lage des Bandkörpers 21 in der Konsole 18 ist annähernd hochkant bzw. die Orientierung des Bandkörpers 21 ist relativ zu einer Senkrechten gegenüber der Transportebene E gering, vorzugsweise um weniger als 30°, geneigt. Somit können beim Reinigen beispielsweise mit Wasser oder Reinigungsmitteln diese Flüssigkeiten leicht ablaufen bzw. Produktreste abgewaschen werden. Vor allem die Antriebswelle 29 und die Umlenkwellen 30 sind leicht zugänglich. Die Konsole 18 selbst ist zur Aufnahme des Förderbands 6, des Sammelbands 7 und des Abführbands 8 gleichermaßen geeignet, auch wenn die verschiedenen Bänder 6, 7, 8 einen unterschiedlichen Abstand der Achsen 24 aufweisen, da die Konsole 8 zur Aufnahme der Achsen 24 drei Positionen 40 mit unterschiedlichen Abständen aufweist.

Es ist auch denkbar, dass in der Wechseleinrichtung 5 für jedes Band 6, 7, 8 jeweils eine eigene Konsole 18 vorgesehen ist, um jeweils einen Bandkörper 21 mit einem Transportband 22 zum Austausch aufzunehmen.

## Patentansprüche

1. Kombination einer Schalenverschließmaschine (1) und einer in Produktionsrichtung (R) stromaufwärts vor einem Zuführband (6) der Schalenverschließmaschine (1) angeordneten Zuführeinrichtung (16), wobei die Schalenverschließmaschine (1) wenigstens einen Bandkörper (21) mit einem Transportband (22) zum Transportieren von Schalen (4, 4a) und eine Antriebseinrichtung (20) umfasst, wobei der Bandkörper (21) überstellbar ist an eine zur Aufnahme des Bandkörpers (21) konfigurierte Wechseleinrichtung (5), die an oder bei der Schalenverschließmaschine (1) an der Zuführeinrichtung (16) vorgesehen ist, wobei das Transportband (22) mittels der Antriebseinheit (20) und einer an seiner Innenseite angreifenden Antriebswelle (29) antreibbar ist und wobei der Bandkörper (21) die Antriebswelle (29) umfasst, die trennbar mit der Antriebseinrichtung (20) gekoppelt ist.

2. Kombination einer Schalenverschließmaschine und einer Zuführeinrichtung nach Anspruch 1, **dadurch gekennzeichnet, dass** die Wechseleinrichtung (5) zur Aufnahme von wenigstens zwei Bandkörpern (21) konfiguriert ist.

3. Kombination einer Schalenverschließmaschine und einer Zuführeinrichtung nach Anspruch 2, **dadurch gekennzeichnet, dass** die Wechseleinrichtung (5) wenigstens eine Konsole (18) umfasst, die zur Aufnahme von wenigstens einem Bandkörpern (21) konfiguriert ist.

4. Kombination einer Schalenverschließmaschine und einer Zuführeinrichtung nach Anspruch 3, **dadurch gekennzeichnet, dass** die Konsole (18) einteilig ist.

5. Kombination einer Schalenverschließmaschine und einer Zuführeinrichtung nach einem der vorangehenden Ansprüchen, **dadurch gekennzeichnet, dass** der Bandkörper (21) zusammen mit dem Transportband (22) werkzeuglos von der Antriebseinheit (20) demontierbar ist.

6. Kombination einer Schalenverschließmaschine und einer Zuführeinrichtung nach einem der vorangehenden Ansprüchen, **dadurch gekennzeichnet, dass** der Bandkörper (21) mit einer ersten Seite in der Antriebseinrichtung (20) lagerbar ist und an einer der ersten Seite gegenüberliegenden zweiten Seite werkzeuglos mittels Verriegelungen (26) befestigbar ist.

## Claims

1. A combination of a tray sealer (1) and of a feed device (16) arranged upstream in a production direction (R) of a feed belt (6) of the tray sealer (1), the tray sealer (1) comprising at least one belt body (21) with a conveyor belt (22) for conveying trays (4, 4a) and a drive unit (20),
wherein the belt body (21) is transferrable to an exchange unit (5), which is provided on or at the tray sealer (1) at the feed device (16) and configured for accommodating the belt body (21),
wherein the conveyor belt (22) is adapted to be driven by means of the drive unit (20) and a drive shaft (29) acting on the inner side of the conveyor belt (22), and
wherein the belt body (21) comprises the drive shaft (29), which is releasably coupled to the drive unit (20).

2. The combination of a tray sealer and a feed device according to claim 1, **characterized in that** the exchange unit (5) is configured for accommodating at least two belt bodies (21).

3. The combination of a tray sealer and a feed device according to claim 2, **characterized in that** the exchange unit (5) comprises at least one bracket (18), which is configured for accommodating at least one belt body (21).

4. The combination of a tray sealer and a feed device according to claim 3, **characterized in that** the bracket (18) is a one-piece component.

5. The combination of a tray sealer and a feed device according to one of the preceding claims, **characterized in that** the belt body (21) is adapted to be dismounted, together with the conveyor belt (22), from the drive unit (20) without making use of a tool.

6. The combination of a tray sealer and a feed device according to one of the preceding claims, **characterized in that** the belt body (21) is adapted to be supported in the drive unit (20) with a first side thereof and that, on a second side thereof located opposite to said first side, it is adapted to be secured in position by means of locking devices (26) without making use of a tool.

## Revendications

1. Combinaison d'une machine de fermeture de barquettes (1) et d'un dispositif d'alimentation (16) agencé en amont, en se référant à la direction de production (R), devant une bande d'alimentation (6) de la machine de fermeture de barquettes (1), combinaison, dans laquelle la machine de fermeture de barquettes (1) comprend au moins un corps à bande (21) avec une bande de transport (22) pour transporter des barquettes (4, 4a), et un dispositif d'entraînement (20),
dans laquelle le corps à bande (21) peut être transféré à un dispositif échangeur (5) configuré pour accueillir le corps à bande (21) et prévu sur le dispositif d'alimentation (16), contre ou près de la machine de fermeture de barquettes (1),
dans laquelle la bande de transport (22) peut être entraînée au moyen de l'unité d'entraînement (20) et d'un arbre d'entraînement (29) venant en prise sur son côté intérieur, et
dans laquelle le corps à bande (21) comprend l'arbre d'entraînement (29), qui est couplé de manière séparable avec le dispositif d'entraînement (20).

2. Combinaison d'une machine de fermeture de barquettes et d'un dispositif d'alimentation selon la revendication 1, **caractérisée en ce que** le dispositif échangeur (5) est configuré pour accueillir au moins deux corps à bande (21).

3. Combinaison d'une machine de fermeture de barquettes et d'un dispositif d'alimentation selon la revendication 2, **caractérisée en ce que** le dispositif échangeur (5) comprend au moins une console (18) qui est configurée pour accueillir au moins un corps à bande (21).

4. Combinaison d'une machine de fermeture de barquettes et d'un dispositif d'alimentation selon la revendication 3, **caractérisée en ce que** la console (18) est en une seule partie.

5. Combinaison d'une machine de fermeture de barquettes et d'un dispositif d'alimentation selon l'une des revendications précédentes, **caractérisée en ce que** le corps à bande (21) peut être démonté, en commun avec la bande de transport (22) et sans outil, de l'unité d'entraînement (20).

6. Combinaison d'une machine de fermeture de barquettes et d'un dispositif d'alimentation selon l'une des revendications précédentes, **caractérisée en ce que** le corps à bande (21) peut être monté par un premier côté dans le dispositif d'entraînement (20), et peut être fixé, sans outil, au moyen de systèmes de verrouillage (26), sur un deuxième côté opposé au dit premier côté.
